Europäisches Patentamt

European Patent Office

Office européen des brevets

(11) Veröffentlichungsnummer: **0 233 339 B1**

(12) **EUROPÄISCHE PATENTSCHRIFT**

(45) Veröffentlichungstag der Patentschrift: 25.09.91

(21) Anmeldenummer: 86116884.7

(22) Anmeldetag: 04.12.86

(51) Int. Cl.⁵: **B23K 9/04**

(54) Werkstück mit Rippen und Verfahren zu seiner Herstellung.

(30) Priorität: 23.12.85 CH 5487/85

(43) Veröffentlichungstag der Anmeldung:
26.08.87 Patentblatt 87/35

(45) Bekanntmachung des Hinweises auf die
Patenterteilung:
25.09.91 Patentblatt 91/39

(84) Benannte Vertragsstaaten:
**AT DE ES FR GB IT**

(56) Entgegenhaltungen:
**US-A- 2 335 451**
**US-A- 4 049 186**

**WELDING AND METAL FABRICATION, Band
45, Nr. 8, Oktober 1977, Seiten 507-510, Haywards Heath, GB; A.M. HORSFIELD: "Arc welding surfacing techniques"**

(73) Patentinhaber: **GEBRÜDER SULZER AKTIENGE-
SELLSCHAFT**
**Zürcherstrasse 9**
**CH-8401 Winterthur(CH)**

(72) Erfinder: **Geisseler, Max**
**Frauenackerstrasse 9**
**CH-8356 Ettenhausen(CH)**

**Beschreibung**

Die Erfindung betrifft ein Werkstück mit Rippen nach dem Oberbegriff des Anspruchs 1. Solche Werkstücke sind bekannt, wobei jedoch Berührungen der Rippen untereinander, wie sie zum Beispiel bei Kreuzungen auftreten, nach Möglichkeit vermieden werden, weil dies mit grossem Aufwand bei der Herstellung verbunden ist und die erreichten Festigkeitseigenschaften meistens unbefriedigend sind. Soll beispielsweise ein grossflächiges, relativ dünnes Werkstück, das neben grossen mechanischen Beanspruchungen auch hohen Temperaturen ausgesetzt ist - wie die Spiegeltragplatte eines Sonnenkolektors für ein Sonnenkraftwerk oder ein grosses Bauteil eines chemischen Reaktors - mit Rippen verstärkt werden, dann muss dieses unter Vermeidung von Inhomogenitäten geschehen, was beim Stand der Technik, wenn überhaupt, nur durch eine sehr aufwendige Wärmebehandlung nach dem Aufbauschweissen der Rippen möglich ist.

Es ist daher Aufgabe der Erfindung, ein Werkstück nach der obigen Gattung zu schaffen, das bei relativ einfacher und kostengünstiger Herstellung hohe Festigkeit und geringe Inhomogenitäten aufweist.

Diese Aufgabe wird durch die Merkmale des Anspruchs 1 gelöst. Im erfindungsgemässen Werkstück sind die verschiedenen Schweissnähte praktisch ineinander verzahnt, wodurch sehr hohe Festigkeitswerte erreicht werden, und der inhärente Vorteil des Aufbauschweissens, dass während der Herstellung die überdeckende Schweissnaht die Wärmebehandlung der überdeckten sozusagen automatisch bewirkt, ist dabei voll ausgenützt: Inhomogenitäten treten daher praktisch gar nicht erst auf. Bei der Herstellung des Werkstückes nach der Erfindung wachsen die Rippen im wesentlichen gleichmässig, Schweisslage für Schweisslage, auf und sind ineinander einstückig integriert.

Die Ansprüche 2 bis 4 charakterisieren bevorzugte Ausführungsformen des erfindungsgemässen Werkstückes.

Sich kreuzende Rippen können nach dem Verfahren laut Anspruch 5 besonders günstig hergestellt werden. Versuche mit Probewerkstücken haben gezeigt, dass die üblichen Schweissvorrichtungen es problemlos erlauben, bei zwei sich kreuzenden Schweissnähten eine davon kurz vor dem Erreichen des Kammes der anderen zu unterbrechen und gleich nach dem Kamm weiterzuführen, so dass erfindungsgemäss im Ueberlappungsbereich die miteinander verbundenen, fertigen Rippen eine gleiche Anzahl Schweisslagen und eine gleiche Rippenhöhe aufweisen.

Das Verfahren nach Anspruch 6 gewährleistet eine gleichmässige Temperaturverteilung während der Herstellung des Werkstückes nach Anspruch 4.

Das Einhalten der Form der Rippen während der Herstellung und auch die allgemeine Festigkeit des Werkstückes werden gemäss Anspruch 7 durch das vorherige Auftragen von zwei Führungsschweissraupen entlang der Rippenbasis günstig beeinflusst.

Auf Grund der folgenden Beschreibung werden die Erfindung und ihre Vorteile anhand der Zeichnung verdeutlicht. Es zeigen:

Figur 1: einen schematisierten Querschnitt einer Rippe in einem Werkstück nach der Erfindung.

Figur 2-5: je einen Ausschnitt von erfindungsgemässen Werkstücken mit je einer bevorzugten Anordnung sich überlappender Rippen.

Figur 6: einen Querschnitt, im grösseren Massstab, eines Ueberlappungsbereiches laut Schnitt VI-VI der Figur 2, schematisch dargestellt.

Figur 6a: einen schematisierten Querschnitt einer anderen Variante eines Ueberlappungsbereiches laut Schnitt VI-VI der Figur 2, auch in grösserem Massstab.

Figur 7: einen ebenfalls schematisch dargestellten Ueberlappungsbereich gemäss Schnitt VII-VII der Figur 4, in grösserem Massstab.

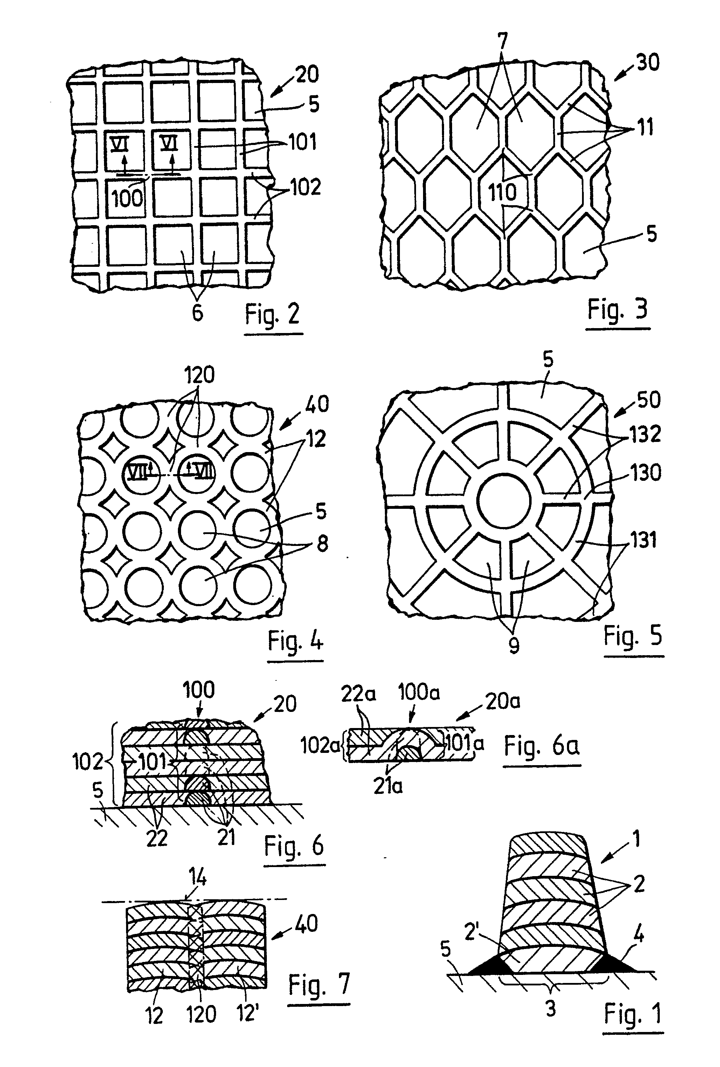

Gemäss Figur 1 besteht eine Rippe 1 aus mehreren lagenweise aufeinander aufgetragenen Schweissnähten 2. Die Breite der Schweissnähte 2 nimmt mit zunehmender Rippenhöhe bezüglich einer Basis 3 der Rippe 1 ab, wodurch einerseits die Herstellung vereinfacht wird, indem jede Schweissnaht sich auf einen relativ breiten Grund abstützt, und andererseits Material ohne Einbusse der Festigkeitseigenschaften gespart wird. Zwei Führungsschweissraupen 4, welche im wesentlichen um die Breite der Rippenbasis 3 voneinander entfernt sind, werden als erster Schritt in der Herstellung der Rippe 1 auf einem Grundteil 5 aufgetragen, um eine erste Schweissnaht 2' der Rippe 1 zu führen und zu stützen, womit die Einhaltung einer guten Form der Rippe 1 gewährleistet ist. Bei der fertigen Rippe 1 bewirken die Führungsschweissraupen 4 form- und materialmässig einen guten Uebergang von der Rippe 1 zum Grundteil 5, wobei die Führungsschweissraupen 4, Kerben vermeidend, vorzugsweise eine leicht konkave Oberfläche aufweisen.

Die Rippe 1 kann breiter als in der Figur 1 dargestellt gewählt werden, wobei dann mehrere Schweissnähte nebeneinander, je Schweisslage, aufgetragen werden. Es können nicht nur die Werkstoffe der Schweissnähte 2, 2' und der Führungsschweissraupen 4 voneinander verschieden sein, sondern auch verschiedene Schweissnähte 2, 2' können aus verschiedenen Werkstoffen bestehen, um bestimmten Bedürfnissen in Bezug auf Festigkeit und/oder oder Korrosionsschutz zu genügen. Obwohl es sich in der Praxis gezeigt hat, dass bei sorgfältiger Auftragung der Schweissnähte 2 ohne weitere Bearbeitung bereits eine gute Oberflächenbeschaffenheit der Rippe 1 erreichbar ist, kann die Rippe 1 bei Bedarf glatt bearbeitet werden. Sie kann auch mit einem anderen Schweisswerkstoff - beispielsweise als Korrosionsschutz - überzogen werden.

In Figur 2 weist ein Werkstück 20 auf dem Grundteil 5 aufgetragene Rippen 101, 102 auf, die offene Hohlräume 6 in Form gerader Prismen mit quadratischem Querschnitt bilden. In der Figur 2 "vertikal" dargestellte Rippen 101 kreuzen "horizontal" dargestellte Rippen 102 in Ueberlappungsbereichen 100, wovon ein Detail in Figur 6 gezeigt ist. Aus der Figur 6 ist ersichtlich, dass im Ueberlappungsbereich 100 abwechselnd zwei aufeinander liegende Schweissnähte 21 der "vertikalen" Rippen 101 und zwei aufeinander liegende Schweissnähte 22 der "horizontalen" Rippen 102 durchgehend aufgetragen sind und dass die entsprechenden, sich mit ihnen kreuzenden Schweissnähte 22 der "horizontalen" Rippen 102 bzw. Schweissnähte 21 der "vertikalen" Rippen 101 im Ueberlappungsbereich 100 unterbrochen aufgetragen sind. Dabei überdeckt im Ueberlappungsbereich 100 stets eine unterbrochene Schweissnaht teilweise eine durchgehende Schweissnaht so, dass im Ueberlappungsbereich 100 für die gleiche Anzahl Schweisslagen die miteinander verbundenen Rippen eine gleiche Rippenhöhe aufweisen. In der Praxis ist eine in den Figuren 2 und 6 nicht gezeigte Tendenz festgestellt worden, dass die Rippen 101, 102 zwischen zwei Ueberlappungsbereichen 100 etwas stärker in Richtung auf den Grundteil 5 schrumpfen, als das in den Ueberlappungsbereichen 100 selber der Fall ist. Die Differenz ist aber sehr klein und kann bei Bedarf durch Auftragen einer zusätzlichen, evtl. dünneren Schweissnaht auf jeder Rippe 101, 102, zwischen je zwei benachbarten Ueberlappungsbereichen 100 korrigiert werden.

Es ist auch möglich, jeweils mehr als zwei aufeinander liegende Schweissnähte 21, 22 einer Rippe 101, 102 durchgehend aufzutragen, oder, ebenfalls abwechselnd, immer eine durchgehende und eine unterbrochene Schweissnaht 21, 22 in einer Rippe 101, 102 aufeinander aufzutragen. Es ist ferner denkbar, verschiedene Anzahlen durchgehender und unterbrochener Schweissnähte 21, 22 in einer Rippe 101, 102 aufeinander aufzutragen, wie z.B. zwei unterbrochene auf drei durchgehende dann wieder vier durchgehende und eine unterbrochene. Die optimalen Verhältnisse müssen von Fall zu Fall in Abhängigkeit der vorhandenen Apparatur, unter anderem, bestimmt werden.

Eine andere mögliche Variante einer erfindungsgemässen Kreuzung von zwei senkrecht aufeinander angeordneten Rippen ist aus der Figur 6a erkennbar, in welcher lediglich zwei Schweisslagen, eine untere und eine obere, gezeigt sind. Hier kreuzen sich zwei Schweissnähte 21a und 22a der unteren Schweisslage von zwei verschiedenen Rippen 101a bzw. 102a so, dass beide einen Ueberlappungsbereich 100a durchgehend überqueren. Dabei steigt die eine Schweissnaht 22a einer "horizontal" angeordneten Rippe 102a über die Schweissnaht 21a einer "vertikal" angeordneten Rippe 101a. In der darauf aufgetragenen oberen Schweisslage sind sowohl die Schweissnaht 21a der "vertikalen" Rippen 101a wie die Schweissnaht 22a der "horizontalen" Rippen 102a unterbrochen.

Ein Werkstück 30 nach Figur 3 weist Rippen 11 auf, welche auf dem Grundteil 5 gleichmässig verteilte Hohlräume 7 in Form von Prismen mit hexagonalem Querschnitt bilden, wobei jeweils drei Rippen 11 in einem Ueberlappungsbereich 110 miteinander verbunden sind. Von den Ueberlappungsbereichen 110 ist kein Detail gezeigt, da diese im wesentlichen gleich aufgebaut sind wie die Ueberlappungsbereiche 100 gemäss Figur 2. Vorteilhafterweise wird bei jeder Schweisslage in jedem Ueberlappungsbereich 110 eine Schweissnaht durchgehend auf zwei der Rippen 11 aufgetragen, welche durchgehende Schweissnaht von einer anderen, unterbrochenen Schweissnaht aus der dritten der Rippen 11 erfindungsgemäss teilweise überdeckt wird, wobei alle fertigen Rippen etwa gleich viele Schweisslagen mit unterbrochenen Schweissnähten aufweisen.

Figur 4 zeigt ein Werkstück 40, dessen ringförmigen Rippen 12 gleichmässig verteilte, offene Hohlräume 8 in Form gerader Zylinder bilden, wobei jede Rippe zusammen mit der unmittelbar benachbarten Rippe einen Ueberlappungsbereich 120 bildet. Figur 7 zeigt, dass die relative Anordnung von zwei benachbarten zylindrischen Rippen 12 und 12' zueinander so gewählt ist, dass im Ueberlappungsbereich 120 für eine gleiche Anzahl Schweisslagen die miteinander verbundenen Rippen eine gleiche durchschnittliche Rippenhöhe 14 aufweisen.

In einem weiteren, erfindungsgemässen Werkstück 50 nach Figur 5 bilden einige Rippen 131 koaxiale, gerade Zylinder. Andere Rippen 132 sind zu den zylindrischen Rippen 131 radial angeordnet. In Ueberlappungsbereichen 130 kreuzen sich die zylindrischen Rippen 131 und die radialen Rippen 132 auf grundsätzlich gleiche Weise wie die Rippen 101, 102 nach Figur 2 und 6 bzw. 6a. In der Ausführungsform der Erfindung nach Figur 5, welche beispielsweise bei der Herstellung von Spiegeltragplatten für Sonnenkolektoren von Bedeutung ist, ist es wichtig, dass während des Aufbauschweissens im ganzen Werkstück eine möglichst gleichmässige Temperatur herrscht. Um dies zu erreichen, wird vorzugsweise zuerst eine Schweissnaht der zylindrischen Rippe 131 mit dem grössten Durchmesser aufgetragen, danach eine Schweissnaht der zylindrischen Rippe 131 mit dem zweitgrössten Durchmesser, und so der Reihe nach weiter, bis eine Schweissnaht des kleinsten Zylinders aufgetragen ist. Nachher wird für jede radiale Rippe 132, ebenfalls der Reihe nach - zum Beispiel im Uhrzeigersinn - eine Schweissnaht aufgetragen, bis auf allen Rippen 131, 132 einer Schweisslage Schweissgut aufgetragen wurde. Danach wird eine neue Schweisslage - wiederum angefangen mit der zylindrischen Rippe 131 mit dem grössten Durchmesser - aufgetragen, wobei diese Reihenfolge der Schweissnahtauftragung bis zur Fertigstellung aller Rippen 131, 132 beibehalten wird. Falls jede Schweisslage einer Rippe 131, 132 aus mehreren nebeneinander angeordneten Schweissnähten besteht, wird vorzugsweise die ganze Schweisslage einer Rippe 131, 132 fertiggestellt, bevor auf die nächste Rippe übergegangen wird. Auch hier begrenzen die Rippen offene Hohlräume 9.

Unter einem Lichtbogenaufbauschweissverfahren ist jedes Aufbauschweissverfahren gemeint, welches mit Hilfe eines Lichtbogens zwischen der Elektrode und dem sich im Aufbau befindlichen Werkstück stattfindet, wie zum Beispiel TIG-, MIG- und Unterpulverschweissverfahren.

Das Grundteil kann sowohl flach als auch gewölbt, zum Beispiel zylindrisch, sein oder sonst irgendeine beliebige Form aufweisen. Auch die Rippe kann die verschiedensten Formen haben, sowohl im Querschnitt wie in Längsrichtung, wobei die Rippenhöhe entlang der Rippe veränderlich sein kann.

Vorzugsweise werden bei der Herstellung des erfindungsgemässen Werkstückes dieses und die Elektrode so in Bezug aufeinander bewegt, dass die Auftragung des Schweissgutes immer bei horizontaler Schweissnaht (in "Wannenlage") geschieht.

## Patentansprüche

1. Werkstück (20,30,40,50) mit Versteifungsrippen (101,102; 11; 12; 131,132), in dem mindestens die Versteifungsrippen durch lagenweises Auftragen von Schweissnähten gemäss einem Lichtbogenaufbauschweissverfahren hergestellt sind, dadurch **gekennzeichnet**, dass mindestens ein Teil der Rippen (101,102; 11; 12; 131,132) in Ueberlappungsbereichen (100; 110; 120; 130) miteinander verbunden sind, in denen in jeder Schweisslage die Schweissnähte (21) einer der Rippen stets mindestens eine der Schweissnähte (22) einer anderen Rippe mindestens teilweise überdeckt, wobei die relative Anordnung der überdeckenden und der überdeckten Schweissnähte zueinander so gewählt ist, dass in jedem Ueberlappungsbereich die miteinander verbundenen, fertigen Rippen eine gleiche Rippenhöhe und eine gleiche Anzahl Schweisslagen aufweisen.

2. Werkstück (20,30) nach Anspruch 1, dadurch gekennzeichnet, dass die Rippen (101,102; 11) gleichmässig verteilte Hohlräume (6; 7) in Form gerader Prismen bilden.

3. Werkstück (40) nach Anspruch 1, dadurch gekennzeichnet, dass die Rippen (12) gleichmässig verteilte Hohlräume (8) in Form gerader Zylinder bilden, wobei jede Rippe (12) zusammen mit der benachbarten Rippe (12) den Ueberlappungsbereich (120) bildet.

4. Werkstück (50) nach Anspruch 1, dadurch gekennzeichnet, dass ein Teil der Rippen (131) koaxiale, gerade Zylinder bilden und dass andere Rippen (132), mit den zylindrischen Rippen Ueberlappungsbereiche (130) bildend, dazu radial angeordnet sind.

5. Lichtbogenaufbauschweissverfahren zur Herstellung eines Werkstückes (20,30) nach Anspruch 1 mit sich kreuzenden Rippen (101,102; 11) durch lagenweises Auftragen von Schweissnähten, wobei in den Ueberlappungsbereichen (100; 110) der sich kreuzenden Rippen in mindestens einer Schweisslage die Schweissnähte (21) der einen Rippe durchgehend und die Schweissnähte (22) der anderen Rippe unterbrochen, und in den übrigen Schweisslagen die Schweissnähte der anderen Rippe durchgehend und diejenige der einen Rippe unterbrochen aufgetragen werden.

6. Lichtbogenaufbauschweissverfahren zur Herstellung eines Werkstückes (50) mit koaxialen zylindrischen Rippen (131) und dazu radialen Rippen (132) durch lagenweises Auftragen von Schweissnähten, wobei in jeder Schweisslage zuerst die Schweissnähte des Zylinders mit dem grössten Durchmesser aufgetragen werden, danach die Schweissnähte des zweitgrössten Zylinders und so der Reihe nach weiter bis zum kleinsten Zylinder aufgetragen werden, wonach in der gleichen Schweisslage die Schweissnähte der radialen Rippen (132) ebenfalls der Reihe nach aufgetragen werden und wobei diese Reihenfolge der Schweissnahtauftragung bei allen weiteren Schweisslagen bis zur Fertigstellung der Rippen wiederholt wird.

7. Lichtbogenaufbauschweissverfahren nach Anspruch 5 oder 6, wobei vor dem Beginn des mit pendelnder Elektrode erfolgenden Auftragens der Schweissnähte für die Rippen zwei parallele Führungsraupen (4) auf einem Grundteil (5) aufgetragen werden, die einen der Breite der Rippenbasis entsprechenden Abstand voneinander haben.

## Claims

1. A workpiece (20, 30, 40, 50) having strengthening ribs (101, 102; 11; 12; 131, 132), at least the strengthening ribs being produced by facing layers of weld seams applied by an arc-welding facing process, characterised in that at least some of the ribs (101, 102; 11; 12; 131, 132) are interconnected in overlap zones (100; 110; 120; 130) in which in each weld layer or facing there is always at least some overlap between the weld seams (21) of one of the ribs and at least one of the weld seams (22) of another rib, the relative arrangement of the overlapping and overlapped weld seams being such that in every overlap zone the interconnected finished ribs have the same rib height and the same number of weld facings.

2. A workpiece (20, 30) according to claim 1, characterised in that the ribs (101, 102; 11) bound uniformly distributed spaces (6; 7) in the form of straight prisms.

3. A workpiece (40) according to claim 1, characterised in that the ribs (12) bound uniformly distributed spaces (8) in the form of straight cylinders, each rib (12) co-operating with the adjacent rib (12) to bound the overlap zone (120).

4. A workpiece (50) according to claim 1, characterised in that some of the ribs (131) bound coaxial straight cylinders and other ribs (132) which form overlap zones (130) with the cylindrical ribs (131) are disposed radially thereof.

5. An arc-welding facing process for producing a workpiece (20, 30) according to claim 1 having crossing ribs (101, 102; 11) by facing layers of weld seams, in which process in the overlap zones (100; 110) of the crossing ribs in at least one weld facing the weld seams (21) of a first rib are applied continuously and the weld seams (22) of a second rib are applied discontinuously whereas in the other weld facings the weld seams of the second rib are applied continuously and the weld seams of the first rib are applied discontinuously.

6. An arc-welding facing process for producing a workpiece (50) having coaxial cylindrical ribs (131) and ribs (132) radial thereto by the application of facing layers of weld seams, the weld seams of the largest-diameter cylinder being applied first in each weld layer, whereafter the weld seams of the second largest cylinder are applied and so on consecutively as far as the smallest cylinder, whereafter in the same facing or layer the weld seams of the radial ribs (132) are also applied seriatim, this sequence of weld seam application being repeated in all the other weld facings or layers until completion of the ribs.

7. A process according to claim 5 or 6 in which before the weld seams for the ribs start to be applied, such application being made with a vibrating electrode, two parallel guide beads (4) spaced apart from one another by a distance corresponding to the width of the rib base are applied to a parent member (5).

## Revendications

1. Pièce d'ouvrage (20, 30, 40, 50) avec nervures de raidissement (101, 102 ; 11 ; 12 ; 131, 132) dans laquelle les nervures de raidissement au moins sont réalisées par application, couche après couche, de cordons de soudure selon un procédé de soudage par recouvrement à l'arc, caractérisée en ce qu'au moins une partie des nervures (101, 102 ; 11 ; 12 ; 131, 132) sont reliées entre elles dans les zones de recouvrement (100 ; 110 ; 120 ; 130) dans lesquelles, dans chaque couche de soudage, les cordons de soudure (21) de l'une des nervures recouvrent toujours, au moins partiellement, au moins l'un des cordons de soudure (22) d'une autre nervure, la disposition relative des cordons de soudure de recouvrement et des cordons de soudure recouverts étant choisie de telle sorte que dans chaque zone de recouvrement, les nervures finies, reliées entre elles, présentent une même hauteur et un même nombre de couches de soudage.

2. Pièce d'ouvrage (20, 30) selon la revendication 1, caractérisée en ce que les nervures (101, 102 ; 11) forment des cavités (6 ; 7) uniformément réparties, en forme de prismes droits.

3. Pièce d'ouvrage (40) selon la revendication 1, caractérisée en ce que les nervures (12) forment des cavités (8) uniformément réparties en forme de cylindres droits, chaque nervure (12) formant avec la nervure (12) voisine, la zone de recouvrement (120).

4. Pièce d'ouvrage (50) selon la revendication 1, caractérisée en ce qu'une partie des nervures (131) forme des cylindres droits coaxiaux et en ce que d'autres nervures (132), formant avec les nervures cylindriques des zones de recouvrement (130), sont disposées radialement par rapport aux premières.

5. Procédé de soudage par recouvrement à l'arc pour la réalisation d'une pièce d'ouvrage (20, 30) selon la revendication 1 avec des nervures (101, 102 : 11) se croisant entre elles par application, couche après couche, de cordons de soudure, dans lequel, dans les zones de recouvrement (10 ; 110) des nervures se croisant entre elles, les cordons de soudure (21) d'une nervure sont appliqués, dans une couche de soudage au moins, de manière continue et les cordons de soudure (22) de l'autre nervure sont appliqués interrompus et dans les autres couches de soudage, les cordons de soudure de l'autre nervure sont appliqués en continu et ceux d'une nervure sont appliqués de manière interrompue.

6. Procédé de soudage par recouvrement à l'arc pour la réalisation d'une pièce d'ouvrage (50) avec nervures (131) cylindriques coaxiales et nervures (132) radiales par rapport à celles-ci, par application, couche après couche, de cordons de soudure, dans lequel dans chaque couche de soudage, on applique tout d'abord les cordons de soudure du cylindre de plus grand diamètre, puis les cordons de soudure du cylindre de diamètre immédiatement inférieur et ainsi de suite jusqu'au plus petit cylindre, après quoi dans la même couche de soudage les cordons de soudure des nervures radiales (132) sont appliqués également dans l'ordre et cet ordre d'application des cordons de soudure est repris pour toutes les autres couches de soudage jusqu'à l'achèvement de la réalisation des nervures.

7. Procédé de soudage par recouvrement à l'arc selon la revendication 5 ou 6, dans lequel on applique, sur une base (5), pour les nervures, avant le début de l'application des cordons de soudure s'effectuant avec électrode oscillante, deux chenilles de guidage (4) parallèles qui sont espacées l'une de l'autre d'une distance correspondant à la largeur de la base des nervures.

Fig. 2

Fig. 3

Fig. 4

Fig. 5

Fig. 6

Fig. 6a

Fig. 7

Fig. 1